# FASCICULE DE BREVET EUROPEEN

(11) **EP 1 668 564 B1**
(45) Date de publication et mention de la délivrance du brevet: **12.11.2008**
(21) Numéro de dépôt: 04787445.8
(22) Date de dépôt: 24.09.2004
(51) Int. Cl.: G06K 9/00, G06K 9/20

(54) **DISPOSITIF DE POSITIONNEMENT D'UN UTILISATEUR PAR REPERAGE SUR LES DEUX YEUX**
EINRICHTUNG ZUR POSITIONIERUNG EINES BENUTZERS DURCH POSITIONSBESTIMMUNG MIT BEIDEN AUGEN
DEVICE FOR POSITIONING A USER BY LOCATION WITH BOTH EYES

(30) Priorité: 01.10.2003 FR 0311485
(43) Date de publication de la demande: 14.06.2006
(73) Titulaire: SAGEM Sécurité, 75015 Paris (FR)
(72) Inventeur: COTTARD, Martin, F-92420 Vaucresson (FR); FOURRE, Joël-Yann, F-78430 Louvecienens (FR); MORIN, Aurélie, F-95610 Eragny sur Oise (FR); MONTEILLIET, Gilles, F-95450 Us (FR)
(74) Mandataire: Lavialle, Bruno François Stéphane
(86) Numéro de dépôt international: PCT/FR2004/002421
(87) Numéro de publication internationale: WO 2005/034018

(56) Documents cités:
- EP-A- 1 041 522
- WO-A-00/39760
- WILDES R P: "IRIS RECOGNITION: AN EMERGING BIOMETRIC TECHNOLOGY" PROCEEDINGS OF THE IEEE, IEEE. NEW YORK, US, vol. 85, no. 9, 1 septembre 1997 (1997-09-01), pages 1348-1363, XP000738562 ISSN: 0018-9219

## Description

La présente invention concerne un dispositif de positionnement d'un utilisateur par repérage sur les deux yeux.

Un tel dispositif de positionnement est par exemple utilisable pour positionner le visage d'un utilisateur devant un dispositif d'identification effectuant une reconnaissance du visage ou des yeux de l'utilisateur.

### ARRIERE PLAN DE L'INVENTION

Les dispositifs d'identification d'un individu par l'iris de l'oeil comprennent des caméras destinées à capturer des images des iris de l'utilisateur. Il est nécessaire que les yeux de l'utilisateur soient correctement positionnés par rapport aux caméras afin d'avoir des images offrant une qualité suffisante pour permettre une reconnaissance des iris et une identification de l'utilisateur.

On a donc pensé à associer au dispositif d'identification un dispositif de positionnement de l'utilisateur. Le dispositif de positionnement détecte la position de l'utilisateur et envoie à ce dernier des indications visuelles ou auditives lui permettant de corriger sa position si celle-ci ne convient pas.

Pour simplifier le positionnement de l'utilisateur, les dispositifs de positionnement présentent généralement à l'utilisateur des repères visuels (par ex. exposés dans les documents: R.P. Wildes, :Iris Recognition: An Emerging Biometric technology", Proc. IEEE 85(9): 1348-1363, 1997, XP738562; WO0175810; JP2003298287) avec lesquels l'utilisateur doit aligner chacun de ses yeux. Or, il existe des personnes qui possèdent un oeil préférentiel pour viser dans l'espace. Ces personnes tendent inconsciemment à utiliser uniquement cet oeil, dit directeur, pour s'aligner sur les repères. Il en résulte un mauvais positionnement rendant impossible l'acquisition d'images correctes des iris de l'utilisateur. De tels dispositifs de positionnement sont donc inutilisables avec ces personnes.

La seule solution actuellement connue pour résoudre ce problème consiste à éduquer les utilisateurs pour leur apprendre à se positionner correctement. Une telle éducation est cependant relativement longue et est rapidement oubliée après une période d'inutilisation du dispositif de positionnement.

Il existe aussi des dispositifs d'identification dans lesquels les caméras sont motorisées afin de pouvoir les positionner par rapport aux yeux de l'utilisateur qui lui reste fixe. Ces dispositifs sont toutefois relativement complexes et onéreux. En outre, il existe un risque d'erreur de l'oeil pris pour cible par la caméra.

### OBJET DE L'INVENTION

Un but de l'invention est de fournir un moyen permettant un positionnement précis d'un utilisateur.

### BREVE DESCRIPTION DE L'INVENTION

A cet effet, on prévoit, selon l'invention, un dispositif de positionnement d'un utilisateur, comprenant un bâti portant deux repères de positionnement disposés pour être visibles chacun par un oeil de l'utilisateur lorsque celui-ci est correctement positionné et des moyens pour former un chemin optique entre chacun des yeux de l'utilisateur et le repère de positionnement correspondant, les chemins optiques étant optiquement séparés l'un de l'autre par rapport aux yeux de l'utilisateur.

Ainsi, l'oeil droit ne peut voir le repère de positionnement correspondant à l'oeil gauche, et inversement. On s'affranchit donc du problème de l'oeil directeur.

Selon un premier mode de réalisation, les moyens pour former les chemins optiques comprennent un prisme au moins partiellement réfléchissant, les repères de positionnement et le prisme étant montés sur le bâti de telle manière que le prisme ait des faces sensiblement en regard des repères de positionnement pour refléter chaque repère de positionnement en direction de l'oeil correspondant de l'utilisateur.

Le dispositif a alors une structure particulièrement simple.

Selon un deuxième mode de réalisation, les moyens pour définir les chemins optiques comprennent des moyens de filtrage qui comprennent, de préférence, deux polariseurs d'un premier type qui sont disposés l'un devant l'autre et en regard d'un des repères de positionnement et deux polariseurs d'un deuxième type qui sont disposés l'un devant l'autre et en regard de l'autre des repères de positionnement.

Lorsque les yeux de l'utilisateur sont alignés avec les polariseurs correspondants, l'utilisateur voit les deux repères de positionnement. Dans le cas contraire, un des yeux de l'utilisateur est aligné avec deux polariseurs de types différents de sorte qu'il ne peut voir le repère.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 est une vue schématique de dessus d'un dispositif de positionnement conforme à un premier mode de réalisation de l'invention, un utilisateur étant correctement positionné par rapport à celui-ci,
- la figure 2 est une vue analogue à celle de la figure 1, l'utilisateur étant incorrectement positionné,
- la figure 3 représente l'image vue par l'utilisateur en cas de bon positionnement,
- les figures 4 et 5 représentent les images vues par l'utilisateur en cas de mauvais positionnement,
- la figure 6 est une vue analogue à la figure 1 d'un dispositif de positionnement selon une variante du premier mode de réalisation,
- la figure 7 est une vue analogue à la figure 1 d'un dispositif de positionnement conforme à un deuxième mode de réalisation de l'invention, un utilisateur étant correctement positionné par rapport à celui-ci,
- la figure 8 est une vue schématique partielle en élévation de ce dispositif,
- la figure 9 représente l'image vue par l'utilisateur en cas de bon positionnement,
- les figures 10 et 11 représentent les images vues par l'utilisateur en cas de mauvais positionnements.

### DESCRIPTION DETAILLEE DE L'INVENTION

Le dispositif de positionnement conforme à l'invention est ici destiné à équiper un appareil d'identification d'utilisateurs fonctionnant par reconnaissance des iris des utilisateurs. L'appareil d'identification comprend de façon connue en soi des caméras 100 d'acquisition d'images des iris de l'utilisateur et un module de traitement des images comprenant notamment une base de données mettant en relation les identités des utilisateurs et des caractéristiques représentatives de leurs iris. Chaque caméra 100 fournit au moins une image d'un des iris de l'utilisateur au module de traitement où les images sont traitées de manière à en extraire des caractéristiques représentatives qui sont comparées aux caractéristiques représentatives figurant dans la base de données.

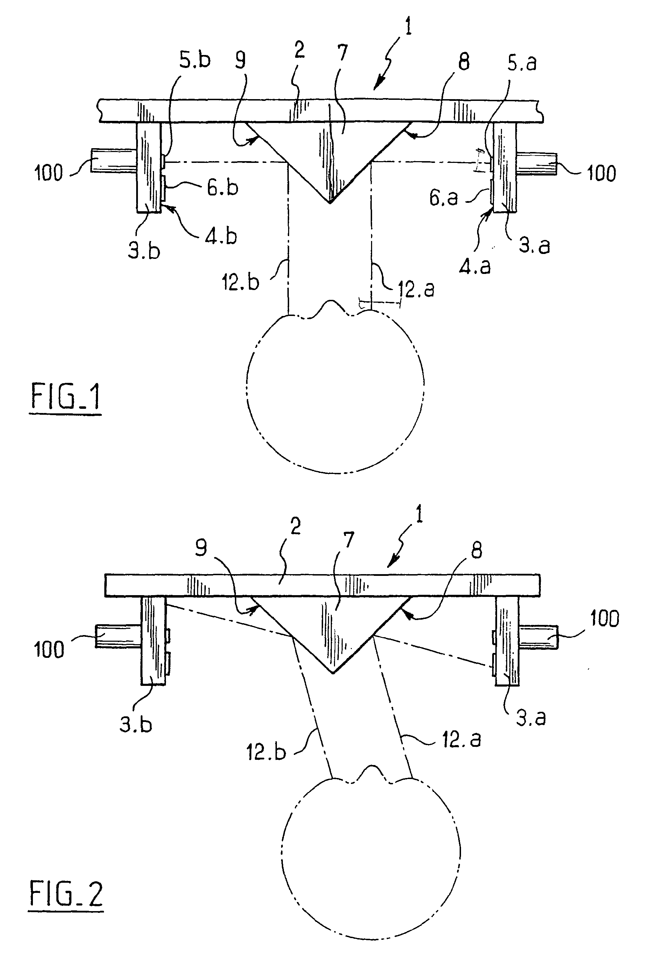

En référence aux figures 1 et 2, le dispositif de positionnement conforme au premier mode de réalisation de l'invention comprend un bâti généralement désigné en 1 ayant une forme générale en U.

Le bâti comprend une partie frontale 2 à partir de laquelle s'étendent une aile droite et une aile gauche 3.a, 3.b ayant respectivement des faces 4.a, 4.b en regard.

La face 4.a de l'aile droite 3.a porte un repère de positionnement 5.a formé d'un point et une flèche de repositionnement 6.a de direction horizontale et orientée à l'opposé de la partie frontale 2. La face 4.b de l'aile gauche 3.b porte également un repère de positionnement 5.b formé d'un point et une flèche de repositionnement 6.b de direction horizontale et orientée à l'opposé de la partie frontale 2.

Un prisme réfléchissant 7 présentant en vue de dessus une section triangulaire est monté sur la partie frontale 2 du bâti 1 entre les ailes 3.a, 3.b. Le prisme réfléchissant 7 comprend des faces 8, 9 formant un angle avec les ailes 3.a, 3.b. Deux lignes de positionnement 10 s'étendent horizontalement sur les faces 8, 9 du prisme réfléchissant 7.

Les caméras 100 de l'appareil d'identification sont ici montées sur les ailes 3.a, 3.b pour capturer les images des iris reflétées par les faces correspondantes 8, 9 du prisme réfléchissant 7.

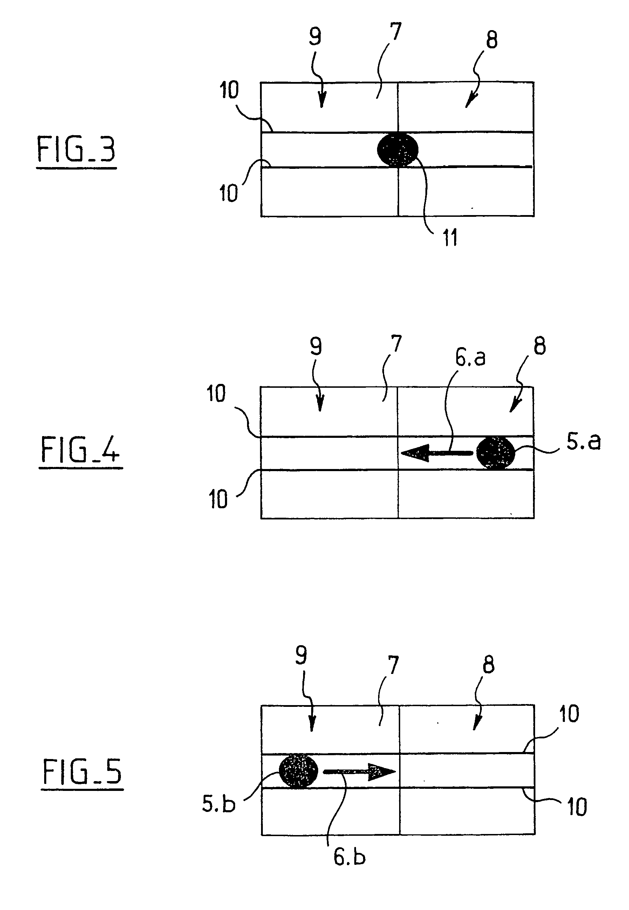

Lorsque l'utilisateur se place devant le dispositif de positionnement, il doit faire en sorte de voir un point 11 disposé sur l'arête du prisme réfléchissant 7 entre les deux lignes de positionnement 10 dessinées sur celui-ci (voir les figures 1 et 3). Ce point est en fait constitué par la superposition des images des repères de positionnement 5.a, 5.b vus par les yeux de l'utilisateur.

Les deux lignes de positionnement 10 permettent à l'utilisateur de positionner sa tête en hauteur. Si le point se trouve au-dessus de la ligne de positionnement 10 supérieure, l'utilisateur doit positionner sa tête plus bas, et inversement.

Si l'utilisateur est trop à droite, il voit sur la face 8 du prisme réfléchissant 7 se réfléchir l'image de la flèche de repositionnement 6.a qui lui indique le sens dans lequel il doit se décaler pour correctement se positionner, c'est-à-dire que l'utilisateur doit ici se décaler vers la gauche (voir les figures 2 et 4).

A l'inverse, si la tête de l'utilisateur se trouve trop à gauche, il voit sur la face 9 du prisme réfléchissant 7 le reflet de la flèche de repositionnement 6.b qui lui indique de se déplacer vers la droite pour être correctement positionné (voir la figure 5).

Le prisme réfléchissant 7 permet de former un chemin optique 12.a (représenté en trait mixte) entre l'oeil droit de l'utilisateur et le repère de positionnement 6.a correspondant et un chemin optique 12.b (représenté en trait mixte) entre l'oeil gauche de l'utilisateur et le repère de positionnement 6.b correspondant. Les chemins optiques 12.a et 12.b sont optiquement séparés l'un de l'autre par rapport aux yeux de l'utilisateur. Ainsi, le repère de positionnement 6.b destiné à être vu par l'oeil gauche de l'utilisateur n'est pas visible par l'oeil droit de celui-ci et inversement.

En variante, les caméras 100 peuvent être montées sur la partie frontale 2 du bâti 1 de part et d'autre du prisme réfléchissant 7.

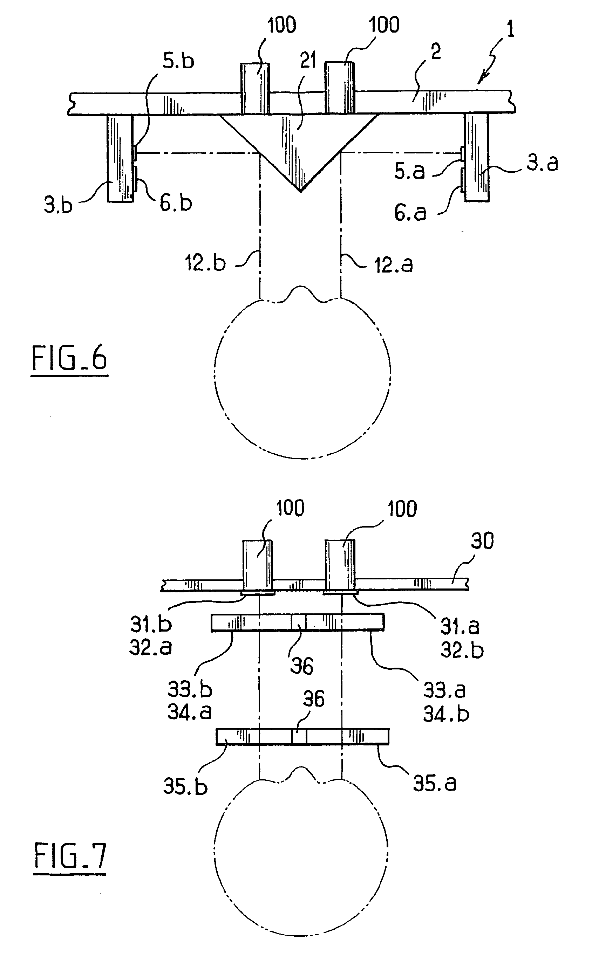

Selon une autre variante représentée à la figure 6, le dispositif peut comprendre un prisme semiréfléchissant 21 au lieu du prisme réfléchissant 7. Les caméras 100 sont alors disposées derrière le prisme semiréfléchissant 21.

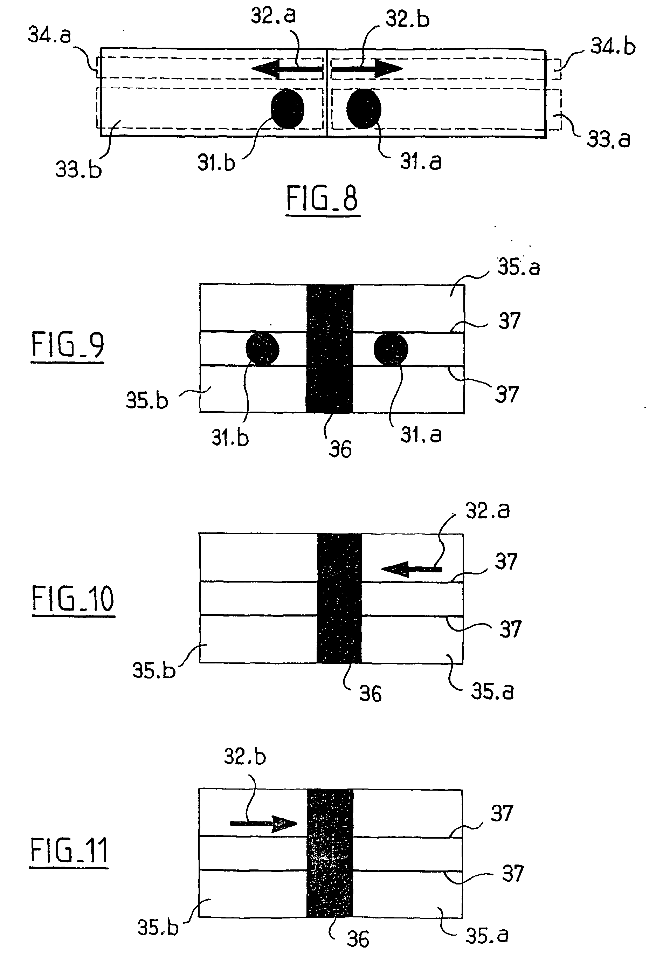

En référence aux figures 7 et 8 et conformément à un deuxième mode de réalisation, le dispositif conforme à l'invention comprend un bâti 30 sur une face duquel sont représentés des repères de positionnement 31.a, 31.b formés ici chacun d'un point. Une flèche de repositionnement 32.b, 32.a est représentée au-dessus de chaque repère de positionnement 31.a, 31.b respectivement. Les flèches de repositionnement 32.a, 32.b sont horizontales et orientées à l'opposé l'une de l'autre.

Des moyens de filtrage sont montés sur le bâti 30 pour s'étendre en regard des repères de positionnement 31.a, 31.b et des flèches de repositionnement 32.a, 32.b.

Les moyens de filtrage comprennent un polariseur vertical 33.a disposé devant le repère de positionnement 31.a et un polariseur horizontal 33.b disposé devant le repère de positionnement 31.b (les polariseurs sont représentés en trait pointillé sur la figure 8).

Les moyens de filtrage comprennent également un polariseur vertical 34.a disposé devant la flèche de repositionnement 32.a et un polariseur horizontal 34.b disposé devant la flèche de repositionnement 32.b.

Les moyens de filtrage comprennent en outre un polariseur vertical 35.a disposé devant le polariseur vertical 33.a et le polariseur horizontal 34.b et un polariseur horizontal 35.b disposé devant le polariseur horizontal 33.b et le polariseur vertical 34.a. Deux lignes de positionnement 37 sont représentées horizontalement sur les polariseurs 35.a et 35.b pour le positionnement en hauteur de l'utilisateur (le principe est le même que pour le premier mode de réalisation).

Les paires de polariseurs adjacents a et b sont séparés par une bande opaque 36.

Les polariseurs 35.a et 35.b sont espacés des polariseurs devant lesquels ils sont placés de telle manière que :
- lorsque l'utilisateur est bien placé (figure 9), l'oeil droit voit le repère de positionnement 31.a au travers des polariseurs verticaux 35.a et 33.a (la flèche de positionnement 32.a est invisible car elle ne se trouve pas dans l'axe de l'oeil et est masquée par au moins l'une des bandes opaques 36 ; la flèche de positionnement 32.b est invisible car elle se trouve derrière le polariseur horizontal 34.b) et l'oeil gauche voit le repère de positionnement 31.b au travers des polariseurs horizontaux 35.b et 33.b (la flèche de positionnement 32.b est invisible car elle ne se trouve pas dans l'axe de l'oeil et est masquée par au moins l'une des bandes opaques 36 ; la flèche de positionnement 32.a est invisible car elle se trouve derrière le polariseur vertical 34.a).
- lorsque l'utilisateur est décalé vers la droite (figure 10), l'oeil droit voit au travers des polariseurs verticaux 35.a et 34.a la flèche de repositionnement 32.a qui lui indique qu'il doit se décaler vers la gauche.
- lorsque l'utilisateur est décalé vers la gauche (figure 11), l'oeil gauche voit au travers des polariseurs verticaux 35.b et 34.b la flèche de repositionnement 32.b qui lui indique qu'il doit se décaler vers la droite.

Les polariseurs 34, 35 permettent donc de définir deux chemins optiques 37.a et 37.b entre chacun des yeux de l'utilisateur et le repère de positionnement correspondant. Les chemins optiques sont optiquement séparés l'un de l'autre par rapport aux yeux de l'utilisateur.

Bien entendu, l'invention n'est pas limitée au mode de réalisation décrit et on peut y apporter des variantes de réalisation sans sortir du cadre de l'invention tel que défini par les revendications.

En particulier, bien que les chemins optiques soient optiquement séparés l'un de l'autre par des moyens optiques dans les modes de réalisation décrits, il est possible d'optiquement séparer les chemins optiques par des moyens physiques tels qu'une cloison formant un obstacle visuel empêchant que le repère de positionnement de l'oeil droit soit visible par l'oeil gauche et inversement.

Les repères de positionnement ou de repositionnement peuvent avoir des formes différentes de celles décrites.

D'autres types de polariseur que ceux décrits peuvent être utilisés. Les moyens de filtrage peuvent également comprendre un filtre laissant passer le rouge disposé en regard de l'oeil gauche et un filtre laissant passer le bleu disposé en regard de l'oeil droit, le repère de positionnement destiné à être visible par l'oeil gauche étant alors en rouge et le repère de positionnement destiné à être vu par l'oeil droit étant alors de couleur bleu. Ainsi, le repère de positionnement rouge ne peut être vu par l'oeil droit au travers du filtre laissant passer le bleu mais est visible par l'oeil gauche au travers du filtre laissant passer le rouge et inversement. D'autres couleurs sont bien évidemment utilisables.

## Revendications

1. Dispositif de positionnement d'un utilisateur, **caractérisé en ce qu'**il comprend un bâti (1 ; 30) portant deux repères de positionnement latéral (5 ; 31) disposés pour être visibles chacun par un oeil de l'utilisateur uniquement lorsque celui-ci est correctement positionné et deux repères de positionnement latéral (32) disposés pour qu'au moins l'un d'eux soit visible par un oeil de l'utilisateur uniquement lorsque celui-ci n'est pas correctement positionné, et des moyens (7 ; 33, 34, 35) pour former un chemin optique entre chacun des yeux de l'utilisateur et les repères correspondants, les chemins optiques étant optiquement séparés l'un de l'autre par rapport aux yeux de l'utilisateur.

2. Dispositif selon la revendication 1, **caractérisé en ce que** les moyens pour former les chemins optiques comprennent un prisme (7) au moins partiellement réfléchissant, les repères de positionnement (5) et le prisme étant montés sur le bâti (1) de telle manière que le prisme ait des faces (8, 9) sensiblement en regard des repères de positionnement pour refléter chaque repère de positionnement en direction de l'oeil correspondant de l'utilisateur.

3. Dispositif selon la revendication 1, **caractérisé en ce que** les moyens (33, 34, 35) pour définir les chemins optiques comprennent des moyens de filtrage.

4. Dispositif selon la revendication 3, **caractérisé en ce que** les moyens de filtrage comprennent deux polariseurs d'un premier type (33.a, 35.a) qui sont disposés l'un devant l'autre en regard d'un des repères de positionnement et deux polariseurs d'un deuxième type (33.b, 35.b) qui sont disposés l'un devant l'autre en regard de l'autre des repères de positionnement.

## Claims

1. A user positioning device **characterized in that** it comprises a stand (1; 30) carrying two positioning markers (5; 31) that are disposed so that each can be seen by a respective one of the eyes of a user, when the user is positioned correctly, two positioning markers (32) that are disposed so that at least one of them can be seen by a respective one of the lyes of the user, when the user is not positioned correctly, and means (7; 33, 34, 35) for forming a light path between each of the eyes of the user and the corresponding positioning marker, the light paths being optically separate from each other relative to the eyes of the user.

2. A device according to claim 1, **characterized in that** the means for forming the light paths comprise a prism (7) that is reflective, at least in part, the positioning markers (5) and the prism being mounted on the stand (1) in such a manner that the prism has surfaces (8, 9) that substantially face respective positioning markers in order to reflect each positioning marker towards the corresponding eye of the user.

3. A device according to claim 1, **characterized in that** the means (33, 34, 35) for defining the light paths comprise filter means.

4. A device according to claim 3, **characterized in that** the filter means comprise two polarizers of a first type (33.a, 35.a) that are disposed one in front of the other in register with one of the positioning markers, and two polarizers of a second type (33.b, 35.b) that are disposed one in front of the other in register with the other one of the positioning markers.

## Patentansprüche

1. Vorrichtung zum Positionieren eines Benutzers, **dadurch gekennzeichnet, dass** sie ein Gestell (1; 30) umfasst, das zwei seitliche Positioniermarkierungen (5; 31) trägt, die so angeordnet sind, dass sie jeweils nur dann für ein Auge des Benutzers sichtbar sind, wenn dieser korrekt positioniert ist, sowie zwei seitliche Positioniermarkierungen (32), die so angeordnet sind, dass mindestens eine von diesen nur dann für ein Auge des Benutzers sichtbar ist, wenn dieser nicht korrekt positioniert ist, sowie Mittel (7; 33, 34, 35) zum Bilden eines optischen Weges zwischen jedem der Augen des Benutzers und den entsprechenden Markierungen, wobei die optischen Wege im Verhältnis zu den Augen des Benutzers optisch voneinander getrennt sind.

2. Vorrichtung nach Anspruch 1, **dadurch gekennzeichnet, dass** die Mittel zum Bilden der optischen Wege ein zumindest teilweise reflektierendes Prisma (7) umfassen, wobei die Positioniermarkierungen (5) und das Prisma so an dem Gestell (1) angebracht sind, dass das Prisma Flächen (8, 9) hat, die sich im Wesentlichen gegenüber den Positioniermarkierungen befinden, um jede Positioniermarkierung in Richtung des entsprechenden Auges des Benutzers zu reflektieren.

3. Vorrichtung nach Anspruch 1, **dadurch gekennzeichnet, dass** die Mittel (33, 34, 35) zum Definieren der optischen Wege Filtermittel umfassen.

4. Vorrichtung nach Anspruch 3, **dadurch gekennzeichnet, dass** die Filtermittel zwei Polarisatoren (33.a, 35.a) eines ersten Typs umfassen, die voreinander gegenüber einer der Positioniermarkierungen angeordnet sind, sowie zwei Polarisatoren (33.b, 35.b) eines zweiten Typs, die voreinander gegenüber der anderen der Positioniermarkierungen angeordnet sind.
